# EUROPÄISCHE PATENTSCHRIFT

(11) **EP 2 974 936 B1**
(45) Veröffentlichungstag und Bekanntmachung des Hinweises auf die Patenterteilung: **03.01.2018**
(21) Anmeldenummer: 15176532.8
(22) Anmeldetag: 13.07.2015
(51) Int. Cl.: B61D 17/02, B61D 23/00

(54) **SCHIENENFAHRZEUG MIT VERMINDERTER GERÄUSCHENTWICKLUNG**
RAIL VEHICLE WITH REDUCED NOISE GENERATION
VEHICULES SUR RAILS A EMISSION DE BRUIT REDUITE

(30) Priorität: 14.07.2014 DE 102014109852
(43) Veröffentlichungstag der Anmeldung: 20.01.2016
(73) Patentinhaber: Bombardier Transportation GmbH, 10785 Berlin (DE)
(72) Erfinder: Harnack, Lars, 13505 Berlin (DE); Kirchner, Karl-Richard, 16556 Borgsdorf (DE)
(74) Vertreter: Zimmermann & Partner Patentanwälte mbB

(56) Entgegenhaltungen:
- EP-A1- 2 428 421
- WO-A1-2011/020785
- WO-A1-2014/040656
- JP-A- 2006 021 672
- JP-A- 2007 001 375
- JP-A- 2007 230 362

## Beschreibung

### Technisches Gebiet

Die vorliegende Erfindung betrifft ein Schienenfahrzeug mit verminderter Geräuschentwicklung und insbesondere ein Schienenfahrzeug mit einer in der Außenseite ausgebildeten Vertiefung mit einer dem Fahrtwind ausgesetzten Fläche, die mit einer mikroperforierten Struktur versehen ist (siehe z.B. JP 2006 021672 A, dem Oberbegriff entsprechend).

### Vorbekannter Stand der Technik

Im Schienenfahrzeugbau, insbesondere bei Hochgeschwindigkeitszügen, stellen Außenkanten an der Außenseite des Schienenfahrzeugs oder dort angebrachte Halteelemente Schallquellen dar, die bei durch den Fahrtwind bedingter Anströmung zu einer Geräuschentwicklung führen können. Die durch diese Schallquellen verursachte Schallbelastung kann erheblich sein, sodass grundsätzlich Bedarf an einer Reduzierung der Schallemission besteht.

Ein Beispiel einer solchen Schallquelle ist eine Handstange, die in einer Kavität an der Außenseite des Schienenfahrzeugs untergebracht ist. Die Handstange dient dem Fahrzeugführer als Einstiegshilfe und ist typischerweise vertikal neben der Fahrertür angebracht. Weitere mögliche Schallquellen sind Trittstufen, die unterhalb der Fahrertür angeordnet sind. Sowohl die Kavität allein als auch die Kombination aus Kavität und Handstange (oder Trittstufe) sind Schallquellen, deren Einfluss direkt an der Quelle reduziert werden kann. Beispielsweise kann durch eine geeignete Führung der anströmenden Luft die Ausbildung von Schall vermindert werden. Dies ist beispielsweise in der EP 2 428 421 A1 beschrieben. Allerding können geringe Veränderungen der Strömung (z.B. Seitenwind) trotz Optimierung der Luftstromführung erneut zu erhöhter Schallentstehung führen, da diese Maßnahmen nur für eine vorgegebene Anströmung angepasst sind.

Einen anderen Ansatz verfolgen die Schriften CN 202879498 U, CN 102152795 A, WO 2011/020785 A1 und JP 2005-324762 A, welche Oberflächen mit Texturen zur Geräuschverminderung einsetzen.

Die Verwendung von schalldämpfenden Materialien in einem Bereich einer Verkleidung von Schienenfahrzeugen, der einem Drehgestell zugewandt ist, wird dagegen in JP 2002-320301 A und in der o.g., gattungsbildenden JP 2006-21672 A vorgeschlagen. Die WO 2014/040656 A1 beschreibt ein Schienenfahrzeug mit einer akustisch optimierten Befestigung einer Stromabnehmereinrichtung, wobei zwischen einer Isolatoreinrichtung und der Dachstruktur eine Einrichtung zur Schwingungsreduzierung angeordnet wird, die in der Fahrzeugquerrichtung und/oder der -Längsrichtung über die Isolatoreneinrichtung hinausragt.

### Nachteile des Standes der Technik

Die bisher bekannten Maßnahmen können jedoch den erzeugten Schall nicht ausreichend reduzieren oder dessen Entstehung unterbinden. Außerdem sind sie teilweise sehr aufwendig und müssen speziell für jede Schallquelle neu angepasst werden.

### Problemstellung

Aufgabe der vorliegenden Erfindung ist es daher, eine einfache und zuverlässige Maßnahme zur Schallreduktion vorzuschlagen.

### Erfindungsgemäße Lösung

Die obige Aufgabe wird durch ein Schienenfahrzeug nach Anspruch 1 gelöst.

Erfindungsgemäß wird ein Schienenfahrzeug mit mindestens einem Wagenkasten und mindestens einer Vertiefung an einer Außenseite eines Bereichs des Wagenkastens bereitgestellt, der die äußeren Seitenwände und das Dach sowie bei Endwagen auch den Endbereich einschließlich Kupplungsmaul bildet, wobei die Vertiefung mindestens eine dem Fahrtwind ausgesetzte Fläche aufweist, die zumindest teilweise mit einer mikroperforierten Struktur versehen ist, dadurch gekennzeichnet, dass die dem Fahrtwind ausgesetzte Fläche innerhalb der Vertiefung Teil eines Halteelements, insbesondere einer Handstange oder eines Fußtrittes, ist, das in einem von der Vertiefung gebildeten Raum angeordnet und mit der mikroperforierten Struktur versehen ist.

Zusätzliche Merkmale der Erfindung sind in den abhängigen Ansprüchen angegeben.

An und/oder in der Vertiefung kann daher mindestens eine dem Fahrtwind ausgesetzte Fläche vorhanden sein, die zumindest teilweise mit der mikroperforierten Struktur versehen ist. Insbesondere bei Hochgeschwindigkeitszügen sind Vertiefungen vorgesehen, in denen beispielsweise Griffe oder Bedienelemente untergebracht sind. Die Vertiefungen dienen dazu, derartige Elemente aerodynamisch "zu verstecken". Um den aeroakustischen Einfluss dieser Vertiefungen und der darin untergebrachten Elemente zu vermindern, ist erfindungsgemäß mindestens eine mikroperforierte Struktur in der Vertiefung vorgesehen, welche eine passive und/oder aktive Schallreduktion bewirkt. Die mikroperforierte Struktur wird dazu bevorzugt in der unmittelbaren Umgebung des die Geräuschentwicklung verursachenden Elements angeordnet oder ist Teil der Außenseite des die Geräuschentwicklung verursachenden Elements. Wenn beispielsweise die Kanten der Vertiefung schallerzeugende Strukturen bilden, so kann die mikroperforierte Struktur beispielsweise bis zu diesen Kanten reichen.

Gemäß einer Ausführungsform ist die dem Fahrtwind ausgesetzte Fläche innerhalb der Vertiefung mit einer mikroperforierten Auflage versehen oder wird von einem zumindest teilweise mikroperforierten Material gebildet, welche die mikroperforierte Struktur darstellt.

Gemäß einer Ausführungsform umfasst die Vertiefung eine Bodenfläche und mindestens eine Seitenfläche, wobei die dem Fahrtwind ausgesetzte Fläche mindestens einen Teilbereich der Bodenfläche und/oder der Seitenfläche oder alle Bereiche der Bodenfläche und/oder der Seitenfläche bildet, welche mit der mikroperforierten Struktur versehen ist, wobei insbesondere die gesamte Oberfläche der Vertiefung mit der mikroperforierten Struktur versehen ist und insbesondere mit einer mikroperforierten Platte verkleidet ist.

Gemäß einer Ausführungsform ist die dem Fahrtwind ausgesetzte Fläche innerhalb der Vertiefung Teil eines Körpers, der in einem von der Vertiefung gebildeten Raum angeordnet und mit der mikroperforierten Struktur versehen ist.

Gemäß einer Ausführungsform ist der Körper aus einem Material mit einer zumindest teilweise mikroperforierten Oberfläche geformt, welche die mikroperforierte Struktur bildet.

Gemäß einer Ausführungsform ist das Halteelement eine Handstange oder ein Fußtritt.

Gemäß einer Ausführungsform sind sowohl die Fläche der Vertiefung als auch die Fläche des Halteelements mit einer mikroperforierten Struktur versehen.

Die mikroperforierte Struktur kann beispielsweise durch eine oder mehrere mikroperforierte Platten gebildet werden, welche in der Vertiefung angeordnet sind und/oder einen Teil der oder die gesamte Außenseite der Vertiefung bilden und/oder einen Teil der oder die gesamte Außenseite eines in der Vertiefung angeordneten Körpers bilden.

Gemäß einer Ausführungsform wird ein Schienenfahrzeug mit einer Außenseite und wenigstens einer in der Außenseite und von der Außenseite des Schienenfahrzeugs gebildeten Vertiefung, die zumindest teilweise mit einer in der Vertiefung angeordneten mikroperforierten Platte verkleidet ist, bereitgestellt. Die Außenseite ist die nach Außen sichtbare Außenfläche des Schienenfahrzeugs, welche die Außenkontur des Schienenfahrzeugs bestimmt, und umfasst die äußeren Seitenwände und das Dach sowie bei Endwagen auch den Endbereich einschließlich Kupplungsmaul, nicht jedoch den Unterbau wie beispielsweise Drehgestellkästen.

Gemäß einer Ausführungsform ist die Vertiefung an einer seitlichen Außenfläche des Wagenkastens außerhalb der Drehgestellkästen und unterhalb des Daches angeordnet.

Durch Einsatz der mikroperforierten Struktur bzw. Platte wird somit eine Schallreduktion "nahe der Quelle" erreicht. Dabei handelt es sich um eine passive Maßnahme, die nicht direkt an der Schallquelle wirkt, sondern entstanden Schall durch Absorption, d.h. Dissipation, beseitigt. Im Gegensatz zu gängigen Absorptionsmaterialien wie poröse Absorber, die im Außenbereich eines Schienenfahrzeugs nur bedingt anwendbar sind, stellen mikroperforierte Platten Materialien dar, die mechanisch sehr robust ausgebildet werden können und gegenüber Umwelteinflüssen weitgehend unempfindlich sind. Außerdem lässt sich die mikroperforierte Platte gezielt auf interessierende Frequenzbereiche der jeweiligen Schallquellen abstimmen, beispielsweise durch Anpassung der Größe, Form oder Dichte der Mikroperforationen. Darüber hinaus lässt sich eine mikroperforierte Platte auch optisch beliebig gestalten, sodass sie beispielsweise optisch kaum in Erscheinung tritt, auch wenn sie an der Außenseite befestigt ist. Ein weiterer Vorteil ist, dass die mikroperforierte Platte leicht zur Formung der Vertiefung eingesetzt werden kann. Damit kann die mikroperforierte Platte weiterhin auch gezielt zur Strömungsführung eingesetzt werden, um beispielsweise bereits die Entstehung von Schall zu vermindern.

Mikroperforierte Platten bestehen typischerweise aus einem faserfreien Material im Gegensatz zu bisher verwendeten schalldämpfenden Materialien, wie Mineralwolle oder Melamin. Dadurch sind diese Platten auch weniger anfällig gegenüber Umwelteinflüssen und sind mechanisch stabiler. Beispielsweise kann die mikroperforierte Platte gemäß einer Ausführungsform aus Metall oder Kunststoff bestehen.

Wenn im Rahmen der vorliegenden Beschreibung von mikroperforierter Platte gesprochen wird, so sollen darunter auch mehrere zu einer Platte zusammengesetzte Platten oder mehrere einzelne Platten verstanden werden. Die mindestens teilweise mikroperforierte Platte, oder die zusammengesetzten mindestens teilweise mikroperforierten Platten, können auch teilweise oder überwiegend, oder auch abschnittsweise gewölbt sein.

Unter einer mikroperforierten Platte soll hier eine Struktur mit in Dickenrichtung der Platte durchgehenden Mikroperforationen, d.h. Öffnungen, verstanden werden im Gegensatz zu mit Texturen versehenen Oberflächen, bei denen die Oberfläche zwar strukturiert, ansonsten jedoch geschlossen ist. Die Mikroperforationen sind deutlich effizienter in der Schallabsorption als Oberflächen, die nur mit einer Textur versehen sind.

Gemäß einer Ausführungsform ist die mikroperforierte Platte beabstandet zur Oberfläche der die Vertiefung bildenden Außenseite angeordnet, sodass ein Zwischenraum zwischen der Oberfläche der Vertiefung und der mikroperforierten Platte verbleibt. Dieser Zwischenraum verbessert die Schallabsorption, da hierdurch eine größere Dissipation der Schallenergie erreicht wird.

Der Abstand der mikroperforierten Platte von der die Oberfläche der Vertiefung bildenden Außenseite kann zwischen wenigen und einigen zehn Millimeter betragen. Der Abstand kann konstant oder auch variierend sein.

Gemäß einer Ausführungsform ist der Zwischenraum zwischen der Oberfläche der Vertiefung und der mikroperforierten Platte in einzelne voneinander getrennte Kammern unterteilt. Diese Unterteilung wird auch als Kassettierung bezeichnet. Die einzelnen Kammern oder Kassetten bewirken, dass der Schall effektiv absorbiert wird.

Gemäß einer Ausführungsform weisen die Kammern eine unterschiedliche Größe auf. Die Größe der einzelnen Kammern kann in einer Längsdimension zwischen ca. 0,1 m und 1 m betragen. Die Kammern können im Wesentlichen auch jeweils die gleiche Größe aufweisen. Eine Variation der Kammergröße ergibt sich häufig bereits aus der Geometrie der Vertiefung, die beispielsweise unsymmetrisch sein kann.

Die Schallabsorption lässt sich durch Wahl des Abstands zwischen der Oberfläche der Vertiefung und der mikroperforierten Platte sowie der Größe der einzelnen Kammern einstellen. Durch Variation dieser Parameter kann die Absorption gezielt auf bestimmte Frequenzbereiche angepasst werden.

Gemäß einer Ausführungsform weist die mikroperforierte Platte Mikroperforationen mit einer durchschnittlichen Weite von 0,2 mm oder kleiner auf. Beispielsweise können die Mikroperforationen Löcher oder Schlitze mit einer Weite von etwa 0,1 mm bis etwa 0,2 mm sein. Gemäß einer Ausführungsform kann die Loch- bzw. Schlitzgröße weniger als 1 mm beträgt. Insbesondere Mikroperforationen in diesem Größenbereich werden als Mikroperforationen einer mikroperforierten Platte im Sinne der vorliegenden Beschreibung angesehen.

Aufgrund der Mikroperforationen weist die mikroperforierte Platte eine gewisse Porosität auf. Diese kann, bezogen auf das Volumen der Platte, wenige Prozent betragen (Gesamtporenvolumen zu Gesamtvolumen der Platte). Beispielsweise kann die Porosität gemäß einer Ausführungsform etwa 0,5 % betragen. Diese Größenordnung hat sich als ausreichend bei gleichzeitig hinreichender mechanischer Stabilität der Platte herausgestellt.

Gemäß einer Ausführungsform sind die Mikroperforationen im Querschnitt durch die mikroperforierte Platte gesehen einseitig von aus der Platte herausragenden Kanten begrenzt, wobei die mikroperforierte Platte so ausgerichtet ist, dass die herausragenden Kanten auf der angeströmten Seite der Mikroperforationen bezüglich der Fahrtrichtung des Schienenfahrzeugs liegen. An den Kanten bilden sich Wirbel, die sehr effektiv zur Schallunterdrückung führen und in hohem Maße zu einer Absorption beitragen. Da die Fahrtrichtung eines Schienenfahrzeugs wechseln kann, können gemäß einer Ausführungsform die Mikroperforationen wechselseitig angeordnet sein, sodass die herausragenden Kanten abwechseln auf gegenüberliegenden Seiten liegen.

Gemäß einer Ausführungsform sind die Mikroperforationen schlitzförmig und verlaufen senkrecht zur Längsrichtung des Schienenfahrzeugs. Dadurch liegen die Kanten der Mikroperforationen quer zur Strömungsrichtung, wenn das Schienenfahrzeug bewegt wird.

Die Schlitzgröße kann beispielsweise so gewählt werden, dass das Verhältnis von Größe der Mikroperforation (Querschnittsfläche der Mikroperforation in der Ebene der Platte) zur Weite des Schlitzes (kleinste Dimension der Mikroperforation in der Ebene der Platte) kleiner gleich 1 mm ist. Unter Berücksichtigung einer Schlitzweite gemäß einem Ausführungsbeispiel zwischen 0,1 und 0,2 mm, ergibt sich damit eine Schlitzlänge, unter Annahme einer etwa rechteckigen Querschnittsfläche, von maximal 10 mm.

Gemäß einer Ausführungsform besteht die mikroperforierte Platte aus Blech oder Kunststoff, da sich diese Materialien leicht umformen und an die Form der Vertiefung anpassen lassen.

Gemäß einer Ausführungsform weist die Oberfläche der die Vertiefung bildenden Außenseite keine Mikroperforationen auf, sondern ist eine geschlossene Oberfläche. Die Außenseite besteht typischerweise aus Metallblechen und weist eine glatte Oberfläche auf. Es ist jedoch auch möglich, dass die Oberfläche der Außenseite teilweise oder vollständig mit einer Textur versehen ist.

Gemäß einer Ausführungsform ist die gesamte Oberfläche der die Vertiefung bildenden Außenseite mit einer mikroperforierten Platte verkleidet. Dadurch wird eine Schallabsorption besonders wirkungsvoll erreicht. Es ist jedoch auch möglich, dass lediglich ein Teilbereich der Oberfläche der Vertiefung mit der mikroperforierten Platte bedeckt ist. So kann die mikroperforierte Platte beispielsweise lediglich am Boden der Vertiefung angebracht sein. Alternativ ist es möglich, dass die mikroperforierte Platte nur an den Seitenwänden angeordnet ist.

Erfindungsgemäß ist in der Vertiefung zumindest ein Halteelement angeordnet. Bei diesem Halteelement kann es sich beispielsweise um eine Handstange oder um eine Trittstange oder Trittstufe handeln. Das Halteelement kann vollständig in der Vertiefung untergebracht sein, d.h. es steht nicht über die Außenseite über.

Gemäß einer Ausführungsform hat das Halteelement zumindest teilweise eine mikroperforierte Oberfläche. Damit wird die zur Verfügung stehende absorbierende Fläche weiter vergrößert und die Schallabsorption weiter verbessert. Das Halteelement kann auch überwiegend oder vollständig eine mikroperforierte Oberfläche aufweisen. Die Struktur und Größe der Mikroperforationen kann mit der Größe und Struktur der mikroperforierten Platte übereinstimmen. Es ist auch möglich, dass die Mikroperforationen des Halteelements eine andere Größe und/oder Struktur aufweisen.

Neben der verbesserten Schallabsorption durch die mikroperforierte Oberfläche wirken die Mikroperforationen unmittelbar auch der Schallentstehung entgegen. Durch die Mikroperforationen wird die kohärente Strömungsablösung verringert, was praktisch mit einer akustischen "Reduzierung" der Schallquelle gleichzusetzen ist.

Werden beispielsweise auch die Kanten an den Übergängen zwischen der Außenseite und der Vertiefung durch mikroperforierte Oberflächenabschnitte realisiert, so wird gleichzeitig auch der Einfluss dieser Kanten auf die Entstehung des Schalls verringert.

Die mikroperforierte Platte übernimmt somit insgesamt drei Funktionen. Zum einen kann sie zu einer besseren oder gezielten Führung der Luftströmung beitragen. Darüber hinaus führt sie zu einer Schallabsorption und Dämpfung von Schwingungen. Schließlich bewirkt sie auch eine gezielte Führung der Schalls, beispielsweise zu Regionen mit hoher Schallabsorption. Generell können damit die drei akustischen/materiellen Interaktionsphänome Reflexion, Absorption und Übertragung in Relation des Akustikfelds in der Nähe der Schallquelle und in der Nähe des weiter entfernten Feldes optimiert werden. Die Mikroperforationen in der Platte und/oder des Halteelements werden zum Umwandeln der Schwingungsenergie in Reibungswärme genutzt.

Gemäß einer Ausführungsform ist zusätzlich mindestens ein Wirbelerzeugungselement an mindestens einer stromaufwärts gerichteten Kante der Vertiefung angeordnet. Dadurch wird eine weitere Schallreduktion erreicht.

Gemäß einer Ausführungsform wird ein Schienenfahrzeug mit einer Außenseite und mindestens einer in und von der Außenseite ausgebildeten Vertiefung bereitgestellt, in der zumindest ein Halteelement angeordnet ist, das zumindest teilweise eine mikroperforierte Oberfläche hat. Die Vertiefung selbst muss nicht mit einer mikroperforierten Platte ausgekleidet sein. Die Mikroperforationen können, wie oben beschrieben, ausgebildet sein. Die Vertiefung kann von einer Unterkante der Außenseite beabstandet sein.

Gemäß einer Ausführungsform ist die Vertiefung zumindest teilweise oder vollständig mit einer in der Vertiefung angeordneten mikroperforierten Platte verkleidet.

Gemäß einer Ausführungsform ist die mikroperforierte Platte beabstandet zur Oberfläche der die Vertiefung bildenden Außenseite angeordnet, sodass ein Zwischenraum zwischen der Oberfläche der Vertiefung und der mikroperforierten Platte verbleibt und der Zwischenraum zwischen der Oberfläche der Vertiefung und der mikroperforierten Platte in einzelne voneinander getrennte Kammern unterteilt ist.

Die vorstehend beschriebenen Ausführungsformen können innerhalb des durch die nachfolgenden Ansprüche definierten Schutzbegehrens miteinander kombiniert werden.

### Kurzbeschreibung der Figuren

Die beiliegenden Zeichnungen veranschaulichen Ausführungsformen und dienen zusammen mit der Beschreibung der Erläuterung der Prinzipien der Erfindung. Die Elemente der Zeichnungen sind relativ zueinander und nicht notwendigerweise maßstabsgetreu.

Gleiche Bezugszeichen bezeichnen entsprechend ähnliche Teile.

Figur 1 zeigt einen Querschnitt durch eine Außenseite eines Schienenfahrzeugs gemäß einer Ausführungsform, in der eine Vertiefung ausgebildet ist.

Figur 2 zeigt eine Draufsicht auf eine mikroperforierte Platte gemäß einer Ausführungsform.

Figur 3 zeigt eine Formgestaltung einer Mikroperforation gemäß einer Ausführungsform.

Figur zeigt, gemäß einer Ausführungsform, ein Schienenfahrzeug mit in der Außenseite ausgebildeten Vertiefungen, in denen Halteelemente angeordnet sind.

### Ausführungsbeispiele

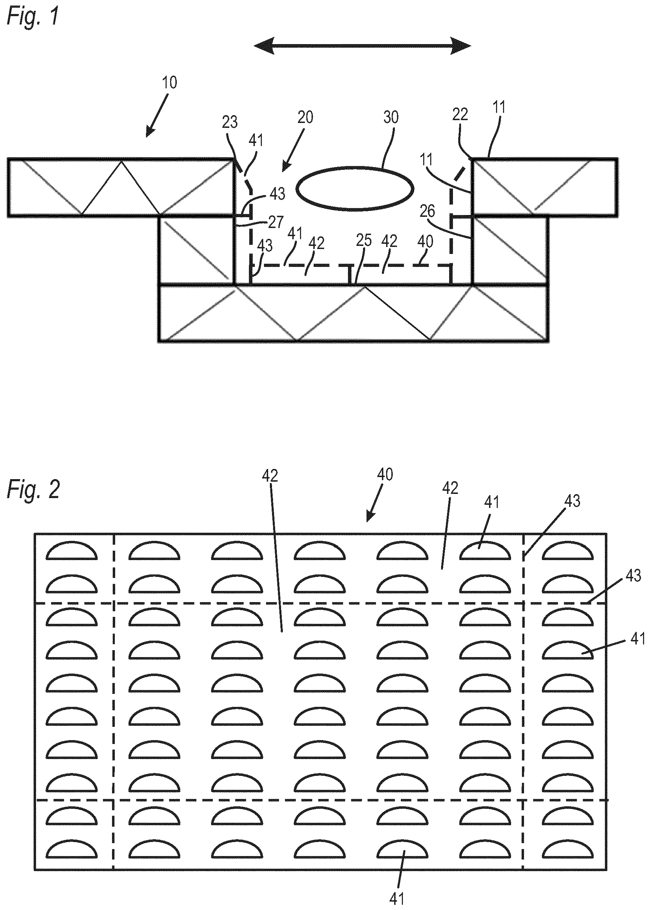

Figur 1 zeigt einen Querschnitt durch eine Außenseite 10 eines Schienenfahrzeugs gemäß einer Ausführungsform. Die Außenseite 10 kann vom Wagenkasten des Schienenfahrzeugs mit einer geschlossenen Oberfläche 11 gebildet werden. Es ist jedoch auch möglich, dass die Außenseite 10 durch separate, am Wagenkasten befestigte Formelemente gebildet wird. Wie in Figur 1 erkennbar, ist in der Außenseite 10 eine Vertiefung oder Kavität 20 ausgebildet. Konkret bilden hier die Strukturelemente des Wagenkastens die Vertiefung 20. Deren Oberfläche stellt gleichzeitig die nach Außen geschlossene Oberfläche 11 der Außenseite 10 dar.

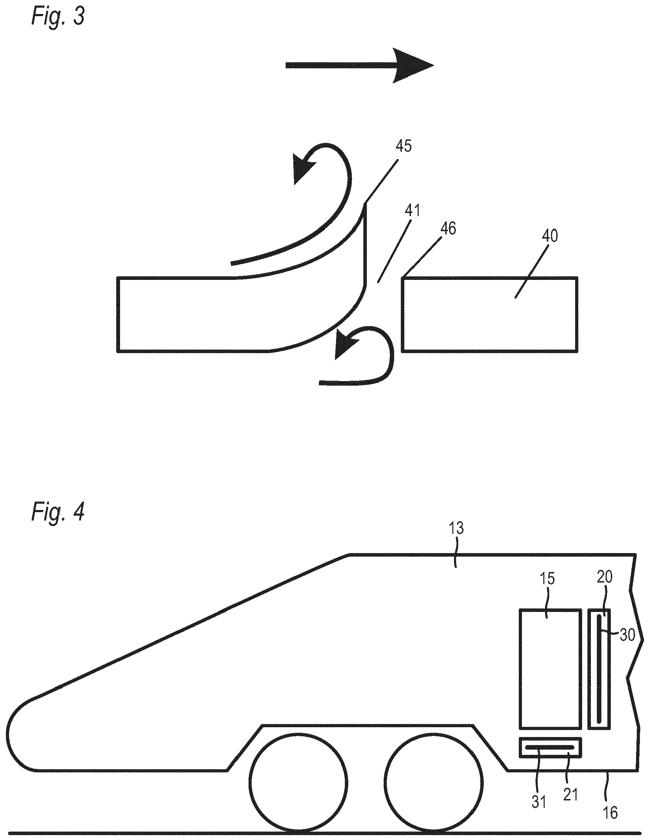

In der Vertiefung 20 kann ein Halteelement 30, hier konkret eine Haltestange, angeordnet sein. In Figur 4 ist der Triebzugkopf eines Schienenfahrzeugs 13 mit einer Fahrertür 15 dargestellt. Seitlich neben der Fahrertür 15 erstreckt sich eine Vertiefung 20, in der eine Haltestange 30 untergebracht ist. Ebenso kann unterhalb der Fahrertür 15 eine Vertiefung 21 zur Unterbringung eines Trittelements 31 in der Außenseite ausgebildet sein. Die Halteelemente 30, 31 können direkt an der Außenseite 10 befestigt sein, insbesondere, wenn diese durch den Wagenkasten selbst gebildet wird. Die Vertiefungen 20, 21 sind von einer Unterkante 16 der Außenseite beabstandet. Außerdem sind die Vertiefungen 20, 21, bis auf die nach Außen weisende Seite, an allen Seiten von der Außenseite 10 umgeben. Die Vertiefungen haben daher eine wannenförmige Form.

Die Richtung der Luftströmung ist in Figur 1 durch den Doppelpfeil gekennzeichnet, da das Schienenfahrzeug 13 in beide Richtungen bewegt werden kann.

Wird das Schienenfahrzeug 13 bewegt, so bildet sich eine Luftströmung entlang der Außenseite 10 heraus. Diese führt an der Vertiefung, beispielsweise an Kanten 22 und 23 der Vertiefung 20, oder auch an dem Halteelement 30, zur Schallerzeugung, dessen Frequenz und Stärke insbesondere von der Geschwindigkeit der Luftströmung und damit von der Fahrgeschwindigkeit des Schienenfahrzeugs 13 abhängt.

Um die Entstehung von Schall zu vermindern und insbesondere um bereits entstandenen Schall zu absorbieren, ist die Vertiefung 20 mit einer mikroperforierten Platte 40 versehen, die beabstandet zur Oberfläche 11 der Vertiefung gelagert ist. Die Mikroperforationen sind mit dem Bezugszeichen 41 versehen.

Bevorzugt folgt die mikroperforierte Platte 40 dem Verlauf der Oberfläche 11 der Außenseite in der Vertiefung 20 und weist einen konstanten Abstand zur Oberfläche 11 auf. Dieser Abstand kann beispielsweise im Bereich von etwa 30 mm bis etwa 50 mm liegen, ohne darauf beschränkt zu sein. Durch Änderung des Abstands zwischen der Oberfläche 11 und der mikroperforierten Platte 40 kann der Absorptionsfaktor angepasst werden.

Die mikroperforierte Platte 40 kann beispielsweise in Form eines Blechs ausgebildet sein, das dann zugeschnitten und an die Größe der Vertiefung 20 angepasst wird. Es ist auch möglich, durch Umformen eine vorgeformte Platte 40 zu bilden, die bereits an die Kontur der Vertiefung 20 angepasst ist. Alternativ können auch mehrere einzelne Platten 40 jeweils am Boden 25 der Vertiefung und an den jeweiligen Seitenwänden 26, 27 der Vertiefung 20 angebracht werden.

Ausgangspunkt für die mikroperforierte Platte 40 können Bleche in einer Größe von etwa 1,5 m mal 2,5 m Seitenlänge sein, die beispielsweise aus Aluminium, Edelstahl oder Schwarzstahl bestehen können. Aus Gewichtsgründen ist Aluminium bevorzugt. Diese Bleche können dann in einem zerspanenden Verfahren perforiert werden, beispielsweise um Mikroperforationen im Bereich zwischen 50 000 und 500 000 Löcher pro Quadratmeter herzustellen. Typischerweise werden die Mikroperforationen 41 in Form von Schlitzen ausgeführt, beispielsweise mit einer Größe von maximal 10 mm. Die Dicke der Bleche kann im Bereich zwischen beispielsweise 0,5 und 3 mm liegen, ohne darauf beschränkt zu sein.

Die Oberfläche der Bleche kann farblich gestaltet und an die Farbgebung der Außenseite angepasst werden.

Die mikroperforierte Platte 40, oder mikroperforierten Platten 40, können an der Außenseite 10 beispielsweise mittels Kleben, Schrauben, Nieten, Löten, Schweißen, insbesondere Ultraschweißen, oder auch per Klemmung befestigt werden.

Gemäß einer Ausführungsform wird die mikroperforierte Platte 40 mittels Stege 43 in der Vertiefung 20 befestigt. Die Stege 43 haben neben der Haltefunktion noch die weitere Funktion, den Zwischenraum zwischen der Platte 40 und der Oberfläche 11 der Vertiefung 20 in einzelne Kammern 42 zu unterteilen. Die Kammern 42 sind durch die Stege 43 voneinander getrennt, sodass voneinander getrennte Hohlräume entstehen. Die Größe der Kammern 42 wirkt sich auf das Absorptionsverhalten der mikroperforierten Platte 40 aus und wir deswegen entsprechend angepasst. Die Größe der einzelnen Kammern 42 kann gleich oder verschieden sein. Eine typische Größe liegt im Bereich zwischen 0,1 m und 1 m.

Wie in Figur 1 erkennbar, erstreckt sich die Platte 40 unabhängig davon, ob sie in Form einer durchgehenden Platte oder aus einzelnen Plattensegmenten zusammengesetzt ist, bis zu den Kanten 22, 23, die den Übergang zwischen der Vertiefung 20 und der Außenseite außerhalb der Vertiefung 20 bilden. Gleichzeitig dient die Platte 40 zur Führung der Luftströmung in der Vertiefung 20. Um zusätzliche Abrisskanten zu vermeiden, tritt die Platte 40 im Bereich der Kanten 22, 23 in Kontakt mit der Außenseite und bildet dort einen glatten Übergang. Damit wird gleichzeitig die dieser Kante nächstliegende Kammer 42 seitlich verschlossen.

Durch Unterteilung des Hohlraums zwischen der mikroperforierten Platte 40 und der Oberfläche 11 der Vertiefung 20 in einzelne Kammern 42 wird die Absorptionsfähigkeit der Platten 40 deutlich verbessert.

Zusätzlich kann das Halteelement 30 teilweise oder vollständig mit einer mikroperforierten Oberfläche versehen werden. Beispielsweise kann nur ein Teil des Umfangs des Halteelements 30 Mikroperforationen aufweisen. Das Halteelement 30 kann beispielsweise aus einer mikroperforierten Platte hergestellt werden. Die Mikroperforation von Haltelement 30 und Platte 40 in der Vertiefung 20 können gleich, aber auch unterschiedlich sein.

Figur 2 zeigte eine Draufsicht auf einen Ausschnitt einer mikroperforierten Platte 40 mit einer Vielzahl von hier identischen Mikroperforationen 41. Diese weisen eine unsymmetrische Form auf, beispielsweise wie in der Querschnittsdarstellung in Figur 3 dargestellt. Die Kante 45, welche die Mikroperforation 41 einseitig begrenzt, ragt aus der Platte 40 hervor, beispielsweise, indem sie herausgebogen ist. Die gegenüberliegende Kante 46 der Mikroperforation 41 liegt dagegen in der Ebene der Platte 40. Die herausgebogene Kante 45 führt zur Bildung von Mikroverwirbelungen, welche eine effektive Schalldissipation bewirken. Durch Variation der Größe der Mikroperforationen 41 und Lage der Kanten 45, 46 können die Absorptionseigenschaften in weiten Bereichen angepasst werden.

In Figur 2 ist weiterhin die Begrenzung der einzelnen Kammern 42 durch die Stege 43 angedeutet. Wie erkennbar, umfasst eine einzelne Kammer 42 eine Vielzahl von Mikroperforationen 41, d.h. eine Kammer 42 ist deutlich größer als eine einzelne Mikroperforation 41. Damit werden relativ große Kammern 42 im Vergleich zu porösem Absorptionsmaterial gebildet. Außerdem lässt sich die Größe der Kammern 42 variieren, was bei einem porösen Material nicht möglich ist.

Neben den hier beschrieben Vertiefungen können weitere Vertiefungen, die in der Außenseite ausgebildet sind, mit den mikroperforierten Platten versehen sind. Beispielsweise können Vertiefungen auf dem Dach des Schienenfahrzeugs zur Unterbringung des Pantographen mit mikroperforierten Platten zumindest teilweise versehen werden. Auch können Zwischenräume zwischen Dachaufbauten mit mikroperforierten Platten ausgekleidet werden. Weiterhin können mikroperforierte Platten in Hohlräumen oder Vertiefungen im Bereich des Drehgestells oder des Kupplungsmauls vorgesehen werden.

Daher wird gemäß einer Ausführungsform auch ein Schienenfahrzeug bereitgestellt, bei dem in einer beliebigen Vertiefung an der Außenseite oder Außenseite des Schienenfahrzeugs mindestens eine mikroperforierte Platte mit Abstand zur Außenseite oder Außenseite zur Schallabsorption angebracht ist.

Wenngleich hierin spezifische Ausführungsformen dargestellt und beschrieben worden sind, liegt es im Rahmen der vorliegenden Erfindung, die gezeigten Ausführungsformen geeignet zu modifizieren, ohne vom Schutzbereich der vorliegenden Erfindung abzuweichen. Die nachfolgenden Ansprüche definieren den besagten Schutzbereich.

### Bezugszeichenliste

- 10: Außenseite
- 11: Oberfläche
- 13: Schienenfahrzeug
- 15: Fahrertür
- 16: Unterkante
- 20,21: Vertiefung
- 22,23: Kante
- 25: Boden der Vertiefung
- 26, 27: Seitenwand der Vertiefung
- 30, 31: Halteelement / Haltestange / Trittelement
- 40: mikroperforierte Platte
- 41: Perforation
- 42: Kammer
- 43: Steg
- 45,46: Kanten der Mikroperforation

## Patentansprüche

1. Schienenfahrzeug mit
- mindestens einem Wagenkasten und mindestens einer Vertiefung (20, 21) an einer Außenseite eines Bereichs des Wagenkastens, der die äußeren Seitenwände und das Dach, sowie bei Endwagen auch den Endbereich einschließlich Kupplungsmaul bildet,
- wobei die Vertiefung (20, 21) mindestens eine dem Fahrtwind ausgesetzte Fläche (30, 31, 40) aufweist, die zumindest teilweise mit einer mikroperforierten Struktur versehen ist, **dadurch gekennzeichnet, dass**
- die dem Fahrtwind ausgesetzte Fläche (30, 31) innerhalb der Vertiefung (20, 21) Teil eines Halteelements, insbesondere einer Handstange (30) oder eines Fußtrittes (31), ist, das in einem von der Vertiefung (20, 21) gebildeten Raum angeordnet und mit der mikroperforierten Struktur versehen ist.

2. Schienenfahrzeug nach Anspruch 1, wobei die dem Fahrtwind ausgesetzte Fläche (30, 31, 40) innerhalb der Vertiefung (20, 21) mit einer mikroperforierten Auflage versehen ist oder von einem zumindest teilweise mikroperforierten Material gebildet ist, welche die mikroperforierte Struktur bildet.

3. Schienenfahrzeug nach Anspruch 1 oder 2, wobei die Vertiefung (20, 21) eine Bodenfläche (25) und mindestens eine Seitenfläche (26, 27) umfasst und die dem Fahrtwind ausgesetzte Fläche (40) mindestens einen Teilbereich der Bodenfläche (25) und/oder der Seitenfläche (26, 27) oder alle Bereiche der Bodenfläche (25) und/oder der Seitenfläche (26, 27) bildet, welche mit der mikroperforierten Struktur versehen ist, wobei insbesondere die gesamte Oberfläche (11, 25, 26, 27) der Vertiefung (20, 21) mit der mikroperforierten Struktur versehen ist und insbesondere mit einer mikroperforierten Platte (40) verkleidet ist.

4. Schienenfahrzeug nach einem der vorherigen Ansprüche, wobei das Halteelement aus einem Material mit einer zumindest teilweise mikroperforierten Oberfläche geformt ist, welche die mikroperforierte Struktur bildet.

5. Schienenfahrzeug nach einem der vorherigen Ansprüche, wobei sowohl eine Fläche der Vertiefung (20, 21) als auch die Fläche des Haltelements mit einer mikroperforierten Struktur versehen sind.

6. Schienenfahrzeug nach einem der vorherigen Ansprüche, wobei die mikroperforierte Struktur Mikroperforationen (41) mit einer durchschnittlichen Weite von 0,2 mm oder kleiner aufweist, insbesondere Schlitze mit einer Breite von 0,1 bis 0,2 mm aufweist.

7. Schienenfahrzeug nach einem der vorherigen Ansprüche, wobei die Mikroperforationen (41) der mikroperforierten Struktur im Querschnitt durch die mikroperforierte Struktur gesehen einseitig von aus der mikroperforierten Struktur herausragenden Kanten (45) begrenzt sind, wobei die mikroperforierte Struktur so ausgerichtet ist, das die herausragenden Kanten (45) auf der angeströmten Seite der Mikroperforationen (41) bezüglich der Fahrtrichtung des Schienenfahrzeugs (13) liegen.

8. Schienenfahrzeug nach einem der vorherigen Ansprüche, wobei die mikroperforierte Struktur aus Blech oder Kunststoff besteht.

9. Schienenfahrzeug nach einem der vorherigen Ansprüche, wobei die Oberfläche (11, 25, 26, 27) der die Vertiefung (20, 21) bildenden Außenseite (10) keine Mikroperforationen aufweist.

10. Schienenfahrzeug nach einem der vorherigen Ansprüche, wobei zusätzlich mindestens ein Wirbelerzeugungselement an mindestens einer stromaufwärts gerichteten Kante der Vertiefung (20, 21) angeordnet ist.

11. Schienenfahrzeug nach einem der vorherigen Ansprüche, wobei die mikroperforierte Struktur durch eine oder mehrere mikroperforierte Platten (40) gebildet ist, die beabstandet zur Oberfläche (11, 25, 26, 27) der die Vertiefung (20, 21) bildenden Außenseite angeordnet ist oder sind, sodass ein Zwischenraum (42) zwischen der Oberfläche (11, 25, 26, 27) der Vertiefung (20, 21) und der mikroperforierten Platte (40) verbleibt.

12. Schienenfahrzeug nach Anspruch 11, wobei der Zwischenraum (42) zwischen der Oberfläche (11, 25, 26, 27) der Vertiefung (20, 21) und der mikroperforierten Platte (20, 21) in einzelne voneinander getrennte Kammern (42) unterteilt ist.

13. Schienenfahrzeug nach Anspruch 12, wobei die Kammern (42) eine unterschiedliche Größe aufweisen.

## Claims

1. A rail vehicle with
- at least one car body and at least one recess (20, 21) at an outside of a portion of the car body, which forms the outer side walls and the roof, and in case of an end car, also forms the end portion including a coupling opening,
- wherein the recess (20, 21) comprises at least one surface (30, 31, 40) exposed to the headwind, which is provided at least partially with a micro-perforated structure, **characterized in that**
- the surface (30, 31) exposed to the headwind within the recess (20, 21) is part of a holding element, in particular a hand rail (30) or of a foot step (31), which is arranged in a space formed by the recess (20, 21) and which is provided with the micro-perforated structure.

2. The rail vehicle according to claim 1, wherein the surface (30, 31, 40) exposed to the headwind, which is arranged in a space formed by the recess (20, 21), is provided with a micro-perforated surface layer or is formed by an at least partially micro-perforated material which forms the micro-perforated structure.

3. The rail vehicle according to claim 1 or 2, wherein the recess (20, 21) comprises a bottom surface (25) and at least one lateral surface (26, 27), and the surface (40) exposed to the headwind forms at least one partial portion of the bottom surface (25) and/or of the lateral surface (26, 27) or all portions of the bottom surface (25) and/or of the lateral surface (26, 27), which is provided with the micro-perforated structure, wherein in particular the entire surface (11, 25, 26, 27) of the recess (20, 21) is provided with the micro-perforated structure and in particular is covered with a micro-perforated plate (40).

4. The rail vehicle according to any one of the preceding claims, wherein the holding element is formed from a material having an at least partially micro-perforated surface, which forms the micro-perforated structure.

5. The rail vehicle according to any one of the preceding claims, wherein both a surface of the recess (20, 21) and also the surface of the holding element is provided with a micro-perforated structure.

6. The rail vehicle according to any one of the preceding claims, wherein the micro-perforated structure comprises micro-perforations (41) with an average width of 0.2 mm or smaller, in particular slits with a width from 0.1 to 0.2 mm.

7. The rail vehicle according to any one of the preceding claims, wherein the micro-perforations (41) of the micro-perforated structure are delimited, seen in cross section through the micro-perforated structure, on one side by edges (45) projecting from the micro-perforated structure, wherein the micro-perforated structure is aligned so that the projecting edges (45) lie on the side of the micro-perforations (41) exposed to the oncoming airflow with respect to the travelling direction of the rail vehicle (13).

8. The rail vehicle according to any one of the preceding claims, wherein the micro-perforated structure consists of sheet metal or synthetic material.

9. The rail vehicle according to any one of the preceding claims, wherein the surface (11, 25, 26, 27) of the outside (10) forming the recess (20, 21) does not have any micro-perforations.

10. The rail vehicle according to any one of the preceding claims, wherein in addition at least one vortex generating element is arranged on at least one edge of the recess (20, 21) directed upstream.

11. The rail vehicle according to any one of the preceding claims, wherein the micro-perforated structure is formed by one or more micro-perforated plates (40) which is or are arranged spaced from the surface (11, 25, 26, 27) of the outside forming the recess (20, 21), so that an intermediate space (42) remains between the surface (11, 25, 26, 27) of the recess (20, 21) and the micro-perforated plate (40).

12. The rail vehicle according to claim 11, wherein the intermediate space (42) between the surface (11, 25, 26, 27) of the recess (20, 21) and of the micro-perforated plate (20, 21) is subdivided into individual chambers (42) separated from one another.

13. The rail vehicle according to claim 12, wherein the chambers (42) have a different size.

## Revendications

1. Véhicule ferroviaire comprenant
- au moins une caisse et au moins un évidement (20, 21) sur une face extérieure d'une zone de la caisse qui forme les parois latérales extérieures et le toit, ainsi que, dans le cas de véhicules d'extrémité, également la zone d'extrémité, y compris la ouverture d'accouplement,
- l'évidement (20, 21) présentant au moins une surface (30, 31, 40) exposée au courant d'air, qui est pourvue au moins en partie d'une structure micro-perforée, **caractérisé en ce que**
- la surface (30, 31) exposée au courant d'air à l'intérieur de l'évidement (20, 21) fait partie d'un élément de retenue, en particulier d'une main courante (30) ou d'un marchepied (31), qui est agencé dans un espace formé par l'évidement (20, 21) et est pourvu de la structure micro-perforée.

2. Véhicule ferroviaire selon la revendication 1, la surface (30, 31, 40) exposée au courant d'air étant pourvue à l'intérieur de l'évidement (20, 21) d'une couche micro-perforée ou étant formée d'un matériau au moins en partie micro-perforé, lequel ou laquelle forme la structure micro-perforée.

3. Véhicule ferroviaire selon la revendication 1 ou 2, l'évidement (20, 21) comportant une surface inférieure (25) et au moins une surface latérale (26, 27) et la surface (40) exposée au courant d'air formant au moins une partie de la surface inférieure (25) et/ou de la surface latérale (26, 27) ou toutes les zones de la surface inférieure (25) et/ou de la surface latérale (26, 27), laquelle est pourvue de la structure micro-perforée, en particulier tout la surface (11, 25, 26, 27) de l'évidement (20, 21) étant pourvue de la structure micro-perforée, et en particulier étant revêtue d'une plaque micro-perforée (40).

4. Véhicule ferroviaire selon l'une quelconque des revendications précédentes, l'élément de retenue étant formé d'un matériau présentant une surface au moins en partie micro-perforée, laquelle forme la structure micro-perforée.

5. Véhicule ferroviaire selon l'une quelconque des revendications précédentes, aussi bien une surface de l'évidement (20, 21) que la surface de l'élément de retenue étant pourvues d'une structure micro-perforée.

6. Véhicule ferroviaire selon l'une quelconque des revendications précédentes, la structure micro-perforée présentant des micro-perforations (41) d'une largeur moyenne inférieure ou égale à 0,2 mm, en particulier des fentes d'une largeur de 0,1 à 0,2 mm.

7. Véhicule ferroviaire selon l'une quelconque des revendications précédentes, les micro-perforations (41) de la structure micro-perforée étant délimitées, vu en section transversale à travers la structure micro-perforée, unilatéralement par des bords (45) faisant saillie de la structure micro-perforée, la structure micro-perforée étant orientée de telle sorte que les bords (45) en saillie se situent sur le côté d'attaque des micro-perforations (41) par rapport au sens de marche du véhicule ferroviaire (13).

8. Véhicule ferroviaire selon l'une quelconque des revendications précédentes, la structure micro-perforée étant constituée de tôle ou de matière plastique.

9. Véhicule ferroviaire selon l'une quelconque des revendications précédentes, la surface (11, 25, 26, 27) de la face extérieure (10) formant l'évidement (20, 21) ne présentant pas de micro-perforations.

10. Véhicule ferroviaire selon l'une quelconque des revendications précédentes, au moins un élément générateur de tourbillon étant agencé en plus sur au moins un bord, orienté vers l'amont, de l'évidement (20, 21).

11. Véhicule ferroviaire selon l'une quelconque des revendications précédentes, la structure micro-perforée étant formée par une ou plusieurs plaques micro-perforées (40), qui est ou sont agencée(s) à distance de la surface (11, 25, 26, 27) de la face extérieure formant l'évidement (20, 21), de telle manière qu'il reste un espace intermédiaire (42) entre la surface (11, 25, 26, 27) de l'évidement (20, 21) et la plaque micro-perforée (40).

12. Véhicule ferroviaire selon la revendication 11, l'espace intermédiaire (42) entre la surface (11, 25, 26, 27) de l'évidement (20, 21) et la plaque micro-perforée (20, 21) étant divisé en différents compartiments (42) séparés les uns des autres.

13. Véhicule ferroviaire selon la revendication 12, les compartiments (42) présentant une taille différente.
